# EUROPEAN PATENT APPLICATION

(11) **EP 3 301 628 A1**
(43) Date of publication of application: **04.04.2018**
(21) Application number: 15897522.7
(22) Date of filing: 18.08.2015
(51) Int. Cl.: G06Q 30/02

(54) **METHOD AND DEVICE FOR DETERMINING ADVERTISEMENT VALUE**

(30) Priority: 09.07.2015 WO PCT/CN2015/083666
(71) Applicant: Huawei Technologies Co., Ltd., Longgang District Shenzhen, Guangdong 518129 (CN)
(72) Inventor: DONG, Zhenhua, Shenzhen Guangdong 518129 (CN); LIU, Zhirong, Shenzhen Guangdong 518129 (CN); HE, Xiuqiang, Shenzhen Guangdong 518129 (CN); TANG, Ruiming, Shenzhen Guangdong 518129 (CN); YANG, Bohai, Shenzhen Guangdong 518129 (CN)
(74) Representative: Kreuz, Georg Maria
(86) International application number: PCT/CN2015/087384
(87) International publication number: WO 2017/004866

(57) **Abstract**

A method for determining advertising value includes: receiving advertisement information, where the advertisement information includes an advertisement ID and information about an operation performed by a user on an advertisement (101); determining an advertising value element according to an advertising application platform, where the advertising value element is an element that affects advertising value (103); determining an advertising value calculation policy according to the advertising value element (105); predicting a value of the advertising value element according to the advertisement information, to obtain the value of the advertising value element (107); and using the value of the advertising value element and the advertising value calculation policy as reference factors, to calculate advertising value of the advertisement (109). Advertising value can be determined more accurately by predicting a value of an advertising value element, making profit maximization of an advertising application platform possible.

## Description

This application claims priority to International Patent Application No. PCT/CN2015/083666, filed on July 9, 2015, and entitled "METHOD AND APPARATUS FOR DETERMINING ADVERTISING VALUE", which is incorporated herein by reference in its entirety.

### TECHNICAL FIELD

Embodiments of the present invention relate to the advertising field, and more specifically, to a method and an apparatus for determining advertising value.

### BACKGROUND

It is well known that advertising is an important profit-making approach for media, content delivery platforms, search engines, and other applications. An advertising application platform aggregates advertisements from advertisers by using a propagation channel of the advertising application platform, and displays the advertisements to users, so as to obtain profits from the advertisers. Generally, when the advertisements are displayed to the users, an advertisement ranked high, that is, an advertisement with a high importance level, is usually an advertisement from which the advertising application platform can make a larger profit. However, how does the advertising application platform determine which of the numerous advertisements can bring it a larger profit? Several methods are provided in the prior art. One of the methods is as follows: The advertiser specifies, for its advertisement that needs to be displayed, a first measurement parameter with a definite value, and the first measurement with the definite value is multiplied by a CTR (click-through rate), to obtain advertising value corresponding to the advertisement. Then, an advertisement with higher advertising value is ranked higher, that is, the advertisement with higher advertising value is displayed with a higher priority to the users. The first measurement parameter herein is a CPC, a CPA, or a CPM. The CPM (Cost per miller) represents a cost per mille, that is, a cost per thousand views. The CPC (Cost per click) represents a cost per click. The CPA (Cost per Action) represents a cost per action. In this method, an advertiser needs to specify a first measurement value with a definite value. However, a value of the first measurement in actual application cannot be calculated accurately because actual advertising value cannot be accurately calculated based on the value of the first measurement specified by the advertiser. To resolve the problem that actual advertising value cannot be accurately calculated, another method is provided in the prior art, that is, how much money to allot to the advertising application platform is determined based on an actual profit obtained by the advertiser from advertisement display. However, in such a post-payment mode, advertising value cannot be calculated in advance. With the advertising value undetermined, the advertising application platform cannot determine an appropriate ranking of the advertisements when displaying the advertisements, and therefore profits cannot be maximized for the advertising application platform by ranking the advertisements appropriately.

### SUMMARY

Embodiments of the present invention provide a method for determining advertising value, so as to increase accuracy of advertising value calculation.

According to a first aspect, a method for determining advertising value is provided, including:
receiving advertisement information, where the advertisement information includes an advertisement ID and information about an operation performed by a user on an advertisement;
determining an advertising value element according to an advertising application platform, and determining an advertising value calculation policy according to the advertising value element, where the advertising value element is an element that affects advertising value; or
determining an advertising value calculation policy according to an advertising application platform, where the advertising value calculation policy is represented by the advertising value element; and predicting a value of the advertising value element according to the advertisement information, to obtain the value of the advertising value element; and
using the value of the advertising value element and the advertising value calculation policy as reference factors, to calculate advertising value of the advertisement.

With reference to the first aspect, in a first possible implementation of the first aspect, when there are two or more determined advertising value elements, the determining an advertising value calculation policy according to the advertising value element includes:
combining the two or more advertising value elements, to obtain the advertising value calculation policy.

With reference to the first possible implementation of the first aspect, in a second possible implementation of the first aspect, the combining the two or more advertising value elements, to obtain the advertising value calculation policy includes: combining the two or more advertising value elements by means of multiplication, to constitute a product formula used for calculating the advertising value, where the product formula is the advertising value calculation policy.

With reference to the first aspect, the first possible implementation of the first aspect, or the second possible implementation of the first aspect, in a third possible implementation of the first aspect, before the determining an advertising value calculation policy according to the advertising value element, the method further includes:
modifying or changing the advertising value element, to obtain a modified or changed advertising value element; and
correspondingly, the determining an advertising value calculation policy according to the advertising value element includes:
   determining the advertising value calculation policy according to the modified or changed advertising value element.

With reference to any one of the first aspect, or the first to the third possible implementations of the first aspect, in a fourth possible implementation of the first aspect, before the predicting a value of the advertising value element according to the advertisement information, to obtain the value of the advertising value element, the method further includes: receiving user information, where the user information includes a user ID, a user age, user gender, or user occupation information; and
correspondingly, the using the value of the advertising value element and the advertising value calculation policy as reference factors, to calculate advertising value of the advertisement includes:
using the user information as another reference factor, and performing calculation in combination with the value of the advertising value element and the advertising value calculation policy, to obtain personalized advertising value for the user.

With reference to any one of the first aspect, or the first to the fourth possible implementations of the first aspect, in a fifth possible implementation of the first aspect, when there are two or more determined advertising value calculation policies, after the determining an advertising value calculation policy according to the advertising value element, or after the determining an advertising value calculation policy according to an advertising application platform, the method further includes:
selecting an optimal advertising value calculation policy from the two or more advertising value calculation policies; and
correspondingly, the using the value of the advertising value element and the advertising value calculation policy as reference factors, to calculate advertising value of the advertisement includes:
   using the value of the advertising value element and the optimal advertising value calculation policy as reference factors, to calculate the advertising value of the advertisement.

With reference to any one of the first aspect, or the first to the fourth possible implementations of the first aspect, in a sixth possible implementation of the first aspect, when there are two or more determined advertising value calculation policies, after the determining an advertising value calculation policy according to the advertising value element, or after the determining an advertising value calculation policy according to an advertising application platform, the method further includes:
weighting the two or more advertising value calculation policies, to obtain a comprehensive advertising value calculation policy; and
correspondingly, the using the value of the advertising value element and the advertising value calculation policy as reference factors, to calculate advertising value of the advertisement includes:
   using the value of the advertising value element and the comprehensive advertising value calculation policy as reference factors, to calculate the advertising value of the advertisement.

With reference to any one of the first aspect, or the first to the sixth possible implementations of the first aspect, in a seventh possible implementation of the first aspect, the determining an advertising value element according to an advertising application platform includes: determining, as the advertising value element, an advertising value element supported by the advertising application platform.

With reference to any one of the first aspect, or the first to the seventh possible implementations of the first aspect, in an eighth possible implementation of the first aspect, the determining an advertising value calculation policy according to an advertising application platform includes: determining, as the advertising value calculation policy, an advertising value calculation policy supported or prestored by the advertising application platform.

With reference to any one of the first aspect, or the first to the eighth possible implementations of the first aspect, in a ninth possible implementation of the first aspect, after the predicting a value of the advertising value element according to the advertisement information, to obtain the value of the advertising value element, the method further includes:
modifying the value of the advertising value element, to obtain a modified value of the advertising value element; and
correspondingly, the using the value of the advertising value element and the advertising value calculation policy as reference factors, to calculate advertising value of the advertisement includes:
   using the modified value of the advertising value element and the advertising value calculation policy as reference factors, to calculate the advertising value of the advertisement.

With reference to any one of the first aspect, or the first to the ninth possible implementations of the first aspect, in a tenth possible implementation of the first aspect, the advertising value element includes: a payment per view (PV), a click-through rate (CTR), a predicted cost per click (PCPC), a pay ratio (PR), a predicted payment per pay (PPP), and a download pay ratio (DPR).

With reference to any one of the first aspect, or the first to the tenth possible implementations of the first aspect, in an eleventh possible implementation of the first aspect, the predicting a value of the advertising value element, to obtain the value of the advertising value element includes:
predicting the value of the advertising value element according to a historical data statistics collection method or a classification or regression method in machine learning, to obtain the value of the advertising value element.

According to a second aspect, an apparatus for determining advertising value is provided, including:
a receiving module, configured to receive advertisement information, where the advertisement information includes an advertisement ID and information about an operation performed by a user on an advertisement;
an advertising value calculation policy determining module, configured to determine an advertising value element according to an advertising application platform, and determine an advertising value calculation policy according to the advertising value element, where the advertising value element is an element that affects advertising value; or configured to determine an advertising value calculation policy according to an advertising application platform, where the advertising value calculation policy is represented by the advertising value element;
a prediction module, configured to predict a value of the advertising value element according to the advertisement information, to obtain the value of the advertising value element; and
an advertising value calculation module, configured to use the value of the advertising value element and the advertising value calculation policy as reference factors, to calculate advertising value of the advertisement.

With reference to the second aspect, in a first possible implementation of the second aspect, when there are two or more advertising value elements determined by the advertising value calculation policy determining module, the advertising value calculation policy determining module is specifically configured to combine the two or more advertising value elements, to obtain the advertising value calculation policy.

With reference to the first possible implementation of the second aspect, in a second possible implementation of the second aspect, when there are two or more advertising value elements determined by the advertising value calculation policy determining module, the advertising value calculation policy determining module is specifically configured to combine the two or more advertising value elements by means of multiplication, to constitute a product formula used for calculating the advertising value, where the product formula is the advertising value calculation policy.

With reference to the second aspect, the first possible implementation of the second aspect, or the second possible implementation of the second aspect, in a third possible implementation of the second aspect, the apparatus further includes an adjustment module, configured to modify or change the advertising value element, to obtain a modified or changed advertising value element; and
correspondingly, the advertising value calculation policy determining module is configured to determine the advertising value calculation policy according to the modified or changed advertising value element.

With reference to any one of the second aspect, or the first to the third possible implementations of the second aspect, in a fourth possible implementation of the second aspect, the receiving module is further configured to receive user information, where the user information includes a user ID, a user age, user gender, or user occupation information; and
correspondingly, the advertising value calculation module is configured to: use the user information as another reference factor, and perform calculation in combination with the value of the advertising value element and the advertising value calculation policy, to obtain personalized advertising value for the user.

With reference to any one of the second aspect, or the first to the fourth possible implementations of the second aspect, in a fifth possible implementation of the second aspect, when there are two or more advertising value calculation policies determined by the advertising value calculation policy determining module, the advertising value calculation policy determining module is further configured to select an optimal advertising value calculation policy from the two or more advertising value calculation policies; and
correspondingly, the advertising value calculation module is configured to use the value of the advertising value element and the optimal advertising value calculation policy as reference factors, to calculate the advertising value of the advertisement.

With reference to any one of the second aspect, or the first to the fourth possible implementations of the second aspect, in a sixth possible implementation of the second aspect, when there are two or more advertising value calculation policies determined by the advertising value calculation policy determining module, the advertising value calculation policy determining module is further configured to weight the two or more advertising value calculation policies, to obtain a comprehensive advertising value calculation policy; and
correspondingly, the advertising value calculation module is configured to use the value of the advertising value element and the comprehensive advertising value calculation policy as reference factors, to calculate the advertising value of the advertisement.

With reference to any one of the second aspect, or the first to the sixth possible implementations of the second aspect, in a seventh possible implementation of the second aspect, the advertising value calculation policy determining module is specifically configured to determine, as the advertising value element, an advertising value element supported by the advertising application platform.

With reference to any one of the second aspect, or the first to the seventh possible implementations of the second aspect, in an eighth possible implementation of the second aspect, the advertising value calculation policy determining module is specifically configured to determine, as the advertising value calculation policy, an advertising value calculation policy supported or prestored by the advertising application platform.

With reference to any one of the second aspect, or the first to the eighth possible implementations of the second aspect, in a ninth possible implementation of the second aspect, the adjustment module is further configured to modify the value of the advertising value element, to obtain a modified value of the advertising value element; and
correspondingly, the advertising value calculation module is configured to use the modified value of the advertising value element and the advertising value calculation policy as reference factors, to calculate the advertising value of the advertisement.

With reference to any one of the second aspect, or the first to the ninth possible implementations of the second aspect, in a tenth possible implementation of the second aspect, the advertising value element includes: a payment per view (PV), a click-through rate (CTR), a predicted cost per click (PCPC), a pay ratio (PR), a predicted payment per pay (PPP), and a download pay ratio (DPR).

With reference to any one of the second aspect, or the first to the tenth possible implementations of the second aspect, in an eleventh possible implementation of the second aspect, the prediction module is specifically configured to predict the value of the advertising value element according to a historical data statistics collection method or a classification or regression method in machine learning, to obtain the value of the advertising value element.

In the embodiments of the present invention, a value of an advertising value element (for example, a payment per view (pV), a click-through rate (CTR), a predicted cost per click (pCPC, predicted cost per click), a pay ratio (PR, Pay Ratio), a predicted payment per pay (pPP, predicted per pay), or a download pay ratio (dPR)) is predicted according to advertisement information (for example, information about an operation performed by a user on an advertisement, including information about viewing, clicking, downloading, and other operations), to obtain the value of the advertising value element; and the value of the advertising value element and an advertising value calculation policy are used as reference factors, to calculate advertising value. In the embodiments of the present invention, the value of the advertising value element is obtained by prediction, but is not specified by experience or excluded from consideration. Therefore, according to the method in the embodiments of the present invention, advertising value can be calculated more accurately in any payment mode of a current advertising application platform.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a basic schematic structural diagram of working of an advertising application platform;
FIG. 2 is a schematic diagram of an operating network according to an embodiment of the present invention;
FIG. 3 is a flowchart of a method for determining advertising value according to an embodiment of the present invention;

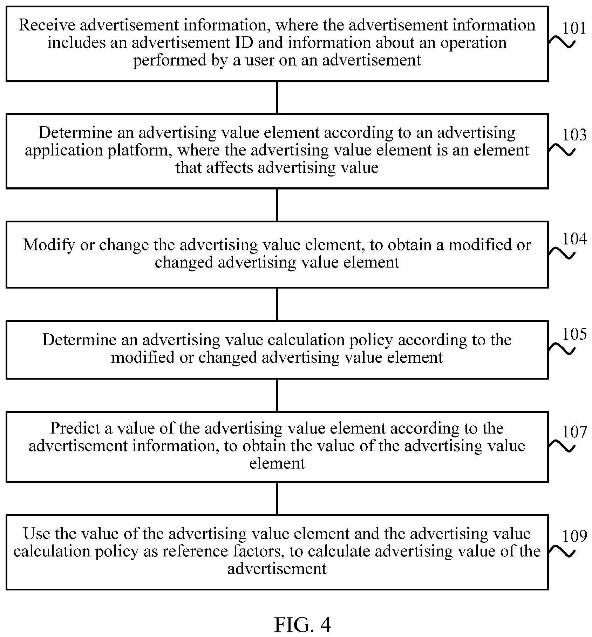

FIG. 4 is a flowchart of a method for determining advertising value according to another embodiment of the present invention;

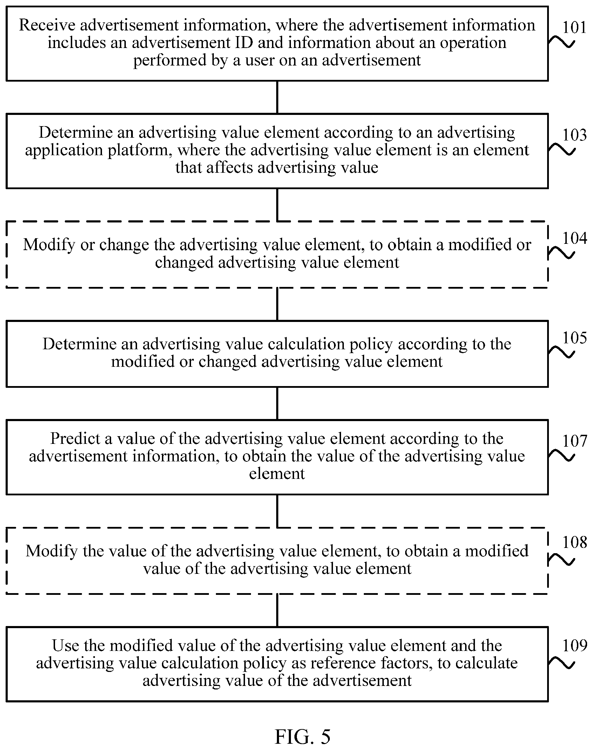

FIG. 5 is a flowchart of a method for determining advertising value according to still another embodiment of the present invention;
FIG. 6 is a block diagram of an apparatus for determining advertising value according to an embodiment of the present invention;
FIG. 7 is a block diagram of an apparatus for determining advertising value according to another embodiment of the present invention; and
FIG. 8 is a block diagram of an apparatus for determining advertising value according to still another embodiment of the present invention.

### DESCRIPTION OF EMBODIMENTS

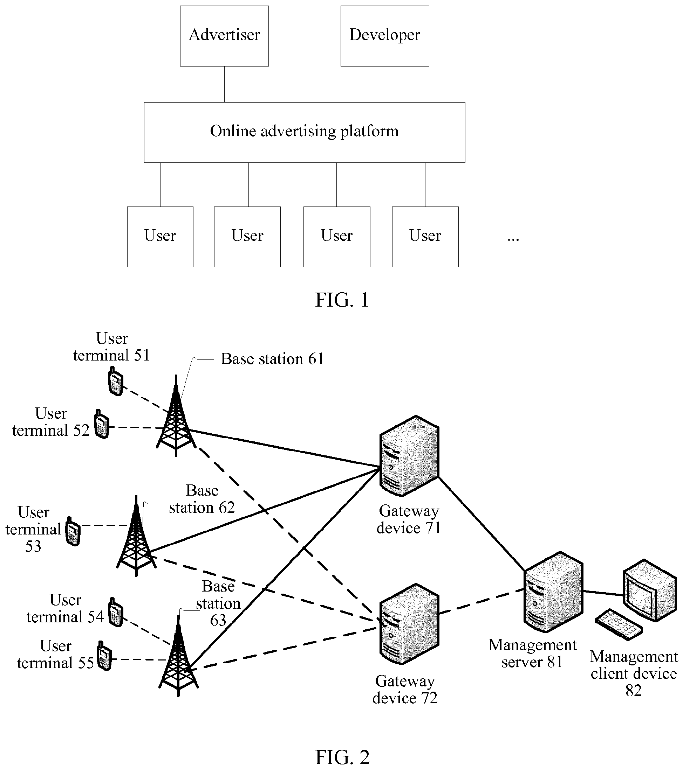

As shown in FIG. 1, an advertising application platform is a platform or a medium, and connects an application developer and an advertiser. On the platform, the developer provides an application, and the advertiser provides an advertisement. The advertising application platform provides an SDK of a corresponding mobile phone system. The SDK (Software Development Kit) means a software development kit. The developer downloads the SDK, and then uses a tool in the SDK to embed the advertisement into the application by using code. Then, the developer uploads the application to the mobile Internet by using another channel. After a user downloads the application and clicks the advertisement, the advertiser pays to the advertising application platform according to a corresponding charging manner. In the era of PC Internet, by using the AdSense advertising platform, Google distributes advertisements, released by numerous advertisers, to small and medium-sized websites on which AdSense ad slots are placed, and thereby achieves success. Currently, there are various forms of online advertising in China, including banner advertising, interstitial advertising, integral-wall advertising, video advertising, push advertising, free-icon advertising, screen opening advertising, full-screen advertising, Sudoku advertising, and so on. The developer, that is, an app developer, is a person who develops mobile phone application software. The developer makes profits not only from the app itself but also from adding the advertisement. With the development of the mobile Internet, increasingly more developers add advertisements to their apps by using resources of advertising application platforms, so as to generate profits. The advertiser is a legal person, another economic organization, or an individual that designs, makes, and releases an advertisement or entrusts another person to design, make, and release an advertisement, so as to promote goods or provide services. The advertiser is an important participant in market economy and advertising activities, and releases a product or brand advertisement for publicity and promotion by using app resources provided by an advertising application platform.

For example, shipments of smartphones were more than one billion sets in 2014, and applications based on smart terminals have been widely used. In 2013, a quantity of downloads from Apple's App Store reached 50 billion, and a quantity of applications exceeded one million. To better serve users and help the users find their concerned applications conveniently and quickly, many application markets have also emerged in China. The application market herein may be one type of the foregoing advertising application platform, such as Tencent's Application of Treasure, Baidu's 91 Assistant, and Huawei's application market. Currently, a major profit-making mode in a terminal application market is: "An advertiser and an advertising platform share profits according to revenue generated from user payment". A characteristic of this advertising profit-making mode is: The advertiser does not pay to the advertising platform when a user clicks an advertisement, but shares, with the advertising platform, profits actually generated after the user actually consumes an advertised product. Currently, this manner is widely applied to promotion services of postpaid apps in the application markets, and is a major profit-making mode in the application markets.

In such a profit-making mode, after the user actually consumes the advertised product and the profits are thereby generated actually, the advertiser and the advertising platform share the revenue. This makes the advertising platform quite passive. For how to actively obtain higher revenue in this profit-making mode, an important factor is how to implement front-end identification of advertisements that may generate higher revenue, and make greater effort to pushing the advertisements. To resolve the problem of "how to implement front-end identification of advertisements that may generate higher revenue", only a problem of how to accurately determine advertising value needs to be resolved.

The embodiments of the present invention provide a method for determining advertising value, so that the advertising application platform can accurately identify advertising value of different advertisements at the front end and then make greater effort to pushing advertisements with higher value in these advertisements. Herein, a value scope of the advertising value generally includes possible revenue brought by the advertisement to the advertiser or the advertising application platform, and the pushing may be performed in various manners, for example, a recommendation-wall manner (such as a ranking in the application market), start-up screen advertisement push (such as full-screen pop-up at start-up of an app), and interstitial advertisement push.

Based on the foregoing background knowledge and the basic summary of the embodiments of the present invention, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The advertising application platform, the advertiser, the developer, and users shown in FIG. 1 may specifically run in a network shown in FIG. 2.

The embodiments of the present invention may be applied to various networks, such as a 2G network, a 3G network, and a 4G network. Referring to FIG. 2, FIG. 2 is a schematic diagram of a network according to an embodiment of the present invention. As shown in FIG. 2, the network includes user terminals 51 to 55, base stations 61 to 63, a base station controller (not shown in the figure), gateway devices 71 and 72, a management server 81, and a management client device 82 (optional). A function performed by the management server 81 in FIG. 2 is corresponding to the advertising application platform in FIG. 1. That is, a specific function of the advertising application platform is implemented by the management server 81. The user terminals 51 to 55 in FIG. 2 are corresponding to the advertiser, the developer, and the users in FIG. 1. Alternatively, the advertiser and the developer may be other servers connected to the management server 81. This is not limited herein. For specific descriptions, refer to descriptions in the following method embodiments, and details are not described herein again.

The technical solutions of this application may be applied to various communications systems, for example, a global system for mobile communications (Global System for Mobile Communications, GSM), a general packet radio service (General Packet Radio Service, GPRS) system, a Code Division Multiple Access (Code Division Multiple Access, CDMA) system, a CDMA2000 system, a Wideband Code Division Multiple Access (Wideband Code Division Multiple Access, WCDMA) system, a Long Term Evolution (Long Term Evolution, LTE) system, or a Worldwide Interoperability for Microwave Access (World Interoperability for Microwave Access, WiMAX) system.

The base station may be a base transceiver station (Base Transceiver Station, BTS) in a GSM system, a GPRS system, or a CDMA system, or may be a NodeB (NodeB) in a CDMA2000 system or a WCDMA system, or may be an evolved NodeB (Evolved NodeB, eNB) in an LTE system, or may be an access service network base station (Access Service Network Base Station, ASN BS) in a WiMAX network, or the like.

The user terminal may be a device that provides voice and/or data connectivity for a user, a handheld device with a wireless connection function, or another processing device connected to a wireless modem. The user terminal can communicate with one or more core networks through a radio access network (Radio Access Network, RAN). The user terminal may be a mobile terminal, such as a mobile phone (also referred to as a "cellular" phone) and a computer that has a mobile terminal, for example, may be a portable, pocket-sized, handheld, computer built-in, or in-vehicle mobile apparatus, which exchanges voice and/or data with the radio access network. For example, the mobile terminal may be a device such as a personal communication service (Personal Communication Service, PCS) phone, a cordless phone, a Session Initiation Protocol (Session Initiation Protocol, SIP) phone, a wireless local loop (Wireless Local Loop, WLL) station, or a personal digital assistant (Personal Digital Assistant, PDA). The terminal may also be referred to as a system, a subscriber unit (Subscriber Unit), a subscriber station (Subscriber Station), a mobile station (Mobile Station), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

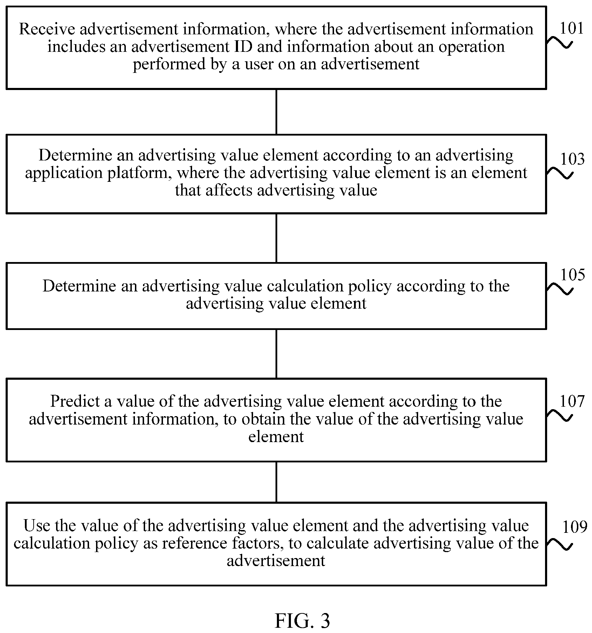

As shown in FIG. 3, FIG. 3 is a schematic flowchart of a method for determining advertising value according to an embodiment of the present invention. The method may be executed by the advertising application platform in FIG. 1.
S101: Receive advertisement information, where the advertisement information includes an advertisement ID and information about an operation performed by a user on an advertisement.

The advertisement information in this embodiment of the present invention includes but is not limited to the advertisement ID and the information about the operation performed by the user on the advertisement. For example, the advertisement information may further include an advertisement category and other information, which are not listed one by one herein. Optionally, in this embodiment of the present invention, the information about the operation performed by the user on the advertisement includes information about viewing, clicking, downloading, and other operations. The information about viewing, clicking, downloading, and other operations may include operation frequency and operation time of viewing, clicking, and downloading, and other related information.

Ad types are distinguished according to advertising propagation media and generally include conventional print advertising, television advertising, broadcast advertising, outdoor advertising, and network advertising. The advertising in this specification mainly involves network advertising, but does not exclude an ad type that is presented by another propagation medium after advertising value is determined by using this method.
S103: Determine an advertising value element according to an advertising application platform, and determine an advertising value calculation policy according to the advertising value element, where the advertising value element is an element that affects advertising value; or
determine an advertising value calculation policy according to an advertising application platform, where the advertising value calculation policy is represented by the advertising value element.

In this embodiment of the present invention, there may be multiple types of advertising value elements, for example, a payment per view (pV), a click-through rate (CTR), a predicted cost per click (pCPC, predicted cost per click), a pay ratio (PR, Pay Ratio), a predicted payment per pay (pPP, predicted per pay), and a download pay ratio (dPR). In a specific application scenario, advertising value elements supported by different advertising application platforms are different. Therefore, in this embodiment of the present invention, the determining an advertising value element according to an advertising application platform is: determining which advertising value elements can be supported by the advertising application platform, or directly determining an advertising value calculation policy that can be supported or is prestored by the advertising application platform, where the advertising value calculation policy is represented by the advertising value element. Different advertising value elements are corresponding to different predictive models. The predictive model is used to predict the advertising value element. For example, to predict the advertising value element CTR (download rate), a classification model needs to be used, and specifically, an LR (Logistic Regression) model may be selected; to predict the advertising value element pCPC, a regression model needs to be used, and specifically, an RF (Random Forest) model or a GBRT (Gradient Boosting Regression Tree) model may be selected. Predicting the advertising value element by using the predictive model may be understood as preparation work performed off line. However, it should be noted that, in this embodiment of the present invention, not all advertising value elements are predicted by using predictive models corresponding to them. Some advertising value elements can be directly calculated by using a statistical method.

Specifically, in this embodiment of the present invention, the advertising value elements may be combined according to an application requirement, so as to obtain an advertising value calculation policy that meets the application requirement. Different advertising value elements determine different properties, such as monotony and unevenness, in the advertising value calculation policy. The combining the advertising value elements according to an application requirement, so as to obtain an advertising value calculation policy that meets the application requirement may be: combining the two or more advertising value elements by means of multiplication, to constitute a product formula used for calculating the advertising value. The product formula is the advertising value calculation policy, that is, a method for calculating the advertising value. There may be multiple types of specific advertising value calculation policies, for example, pV (when the advertising application platform supports only one advertising value element, or when only one advertising value element is selected from multiple advertising value elements in this embodiment of the present invention, the advertising value element directly constitutes an advertising value calculation policy corresponding to the advertising value element, that is, in this case, a value of the advertising value element may be considered as equal to the advertising value; however, the advertising value element may be further modified or changed, and the advertising value calculation policy is then determined according to a modified or changed advertising value element; this is described in detail hereinafter, and details are not described herein again), where the pV is directly predicted or calculated; pCPC*CTR, where the pCPC and the CTR are separately predicted or calculated; pPP*PR, where the pPP and the PR are separately predicted or calculated; pPP*dPR*CTR, where the pPP, the dPR, and the CTR are separately predicted or calculated; or a combination (for example, weighted averaging) of any two or more of the foregoing advertising value calculation policies.
S107: Predict a value of the advertising value element according to the advertisement information, to obtain the value of the advertising value element.

Optionally, the predicting a value of the advertising value element according to the advertisement information may be performed according to a historical data statistics collection method or a classification or regression method in machine learning. It should be noted that, when N advertising value elements are determined according to the advertising application platform, in this embodiment of the present invention, the predicting a value of the advertising value element according to the advertisement information should be understood as separately predicting a value of each of the N advertising value elements according to the advertisement information, where N is a positive integer greater than or equal to 1. It should be noted that, when there is only one advertising value element, a value of the advertising value element is predicted according to the advertisement information; when there are multiple advertising value elements, values of the multiple advertising value elements need to be predicted according to the advertisement information, where multiple means two or more.
S109: Use the value of the advertising value element and the advertising value calculation policy as reference factors, to calculate advertising value of the advertisement.

Specifically, the specific value of the advertising value element may be substituted into the advertising value calculation policy, and the advertising value is obtained by calculation.

To sum up, in this embodiment of the present invention, an advertising value element is determined according to an advertising application platform, and a value of the advertising value element is predicted according to the advertisement information, to obtain the value of the advertising value element; then, the value of the advertising value element and the advertising value calculation policy are used as reference factors, to calculate advertising value of the advertisement. In this way, the advertising value is accurately determined at the front end, and profit maximization of the advertising application platform is made possible.

Based on the foregoing embodiment, an optional implementation is that, before the determining an advertising value calculation policy according to the advertising value element in step S103, the method further includes S104: Modify or change the advertising value element, to obtain a modified or changed advertising value element. Correspondingly, the determining an advertising value calculation policy according to the advertising value element in step S103 specifically includes: determining the advertising value calculation policy according to the modified or changed advertising value element. It should be noted that the modification and change herein may be performed according to an actual status of the advertising application platform. Specifically, the change herein may be transforming the advertising value element to generate an increasing effect or a decreasing effect, so as to meet an actual requirement of the advertising application platform; the modification herein may be making adaptive compensation for the advertising value element, so as to balance a deviation that may be caused by the advertising value element.

Based on the foregoing embodiment and implementation, before the predicting a value of the advertising value element according to the advertisement information, to obtain the value of the advertising value element in step S107, an optional implementation is:
receiving user information, where the user information includes a user ID, a user age, user gender, or user occupation information.

It should be noted that the user information herein includes but is not limited to the user ID, the user age, the user gender, or the user occupation information. In addition, the user ID, the user age, the user gender, or the user occupation information is optional information. In a specific implementation process, the user information may further include information that indicates interests of the user, social-circle information of the user, context information of viewing the advertisement by the user, or the like.

Correspondingly, the using the value of the advertising value element and the advertising value calculation policy as reference factors, to calculate advertising value of the advertisement includes:
using the user information as another reference factor, and performing calculation in combination with the value of the advertising value element and the advertising value calculation policy, to obtain personalized advertising value for the user.

The advertising value is calculated by using the user information as a reference factor, to obtain the personalized advertising value for the user. That is, it is considered that a same advertisement has different advertising value for different users. For example, for a young man, advertisements about games have greater value than advertisements about shopping; conversely, for a young woman, advertisements about shopping have greater value than advertisements about games. Specifically, different individuals have different characteristics, and user age groups, job categories, education levels, interests, and the like are obtained according to user information, so as to calculate different advertising value for different users. In this way, the advertising application platform can use different advertisement presentation policies for different users according to the personalized advertising value, making profit maximization of the advertising application platform possible.

Based on the foregoing embodiment and implementations, when there are two or more determined advertising value calculation policies, after the determining an advertising value calculation policy according to the advertising value element in step S103, or after the determining an advertising value calculation policy according to an advertising application platform in step S103, an optional implementation is:
selecting an optimal advertising value calculation policy from the two or more advertising value calculation policies.

Correspondingly, in step S109, the using the value of the advertising value element and the advertising value calculation policy as reference factors, to calculate advertising value of the advertisement includes:
using the value of the advertising value element and the optimal advertising value calculation policy as reference factors, to calculate the advertising value of the advertisement.

It should be noted that the optimal advertising value calculation policy herein is outcome-oriented. That is, the advertising value is calculated by using the advertising value calculation policy, and then different advertisements are ranked and presented to the users according to the advertising value, so that maximum profits are brought to the advertising application platform; in this case, the advertising value calculation policy is considered as the optimal advertising value calculation policy. It should be noted that ranking different advertisements according to advertising value usually involves multiple advertisements and calculation of value of the multiple advertisements, and a final ranking is a ranking of the advertising value corresponding to the multiple advertisements. Herein, "multiple" may be two or more.

In addition, it should be noted that optimal advertising value calculation policies may be different in different scenarios. Methods for selecting an optimal advertising value calculation policy include: evaluating, according to offline AUCs (area under the curve), MAEs (mean absolute error), and other evaluation indicators, different calculation policies and predictive models corresponding to advertising value elements in the calculation policies; or evaluating different advertising value calculation policies according to online revenues.

Based on the foregoing embodiment and implementations, when there are two or more determined advertising value calculation policies, after the determining an advertising value calculation policy according to the advertising value element in step S103, or after the determining an advertising value calculation policy according to an advertising application platform in step S103, another optional implementation is:
weighting the two or more advertising value calculation policies, to obtain a comprehensive advertising value calculation policy.

Correspondingly, the using the value of the advertising value element and the advertising value calculation policy as reference factors, to calculate advertising value of the advertisement includes:
using the value of the advertising value element and the comprehensive advertising value calculation policy as reference factors, to calculate the advertising value of the advertisement.

To be distinguished from the comprehensive advertising value calculation policy, the advertising value calculation policy is referred to as an independent advertising value calculation policy. The comprehensive advertising value calculation policy is a combination of any two or more independent advertising value calculation policies. In this implementation, a combination manner may be weighting. Certainly, the present invention does not limit the combination manner. Any combination manner that can achieve the objectives and effects of the present invention shall fall within the protection scope of the present invention, and details are not described herein again. It should be noted that calculation of the advertising value by using the comprehensive advertising value calculation policy may be specifically performed in a manner of ensemble learning. The ensemble learning is a machine learning method in which learning is performed by using a series of predictive models and all learning outcomes are consolidated according to a rule, so as to obtain a better learning effect than that obtained by using a single predictive model. The independent advertising value calculation policy herein is a complete policy that can complete calculation of advertising value independently, for example, the above-mentioned pV, pCPC*CTR, pPP*PR, and pPP*dPR*CTR.

Based on this embodiment of the present invention and all possible implementations based on this embodiment of the present invention, optionally, the determining an advertising value element according to an advertising application platform in step S103 includes: determining, as the advertising value element, an advertising value element supported by the advertising application platform.

Optionally, in step S103, the determining an advertising value calculation policy according to an advertising application platform includes: determining, as the advertising value calculation policy, an advertising value calculation policy supported or prestored by the advertising application platform.

Further optionally, after the predicting a value of the advertising value element according to the advertisement information, to obtain the value of the advertising value element in step S107, another optional implementation is that:
the method further includes S108: Modify the value of the advertising value element, to obtain a modified value of the advertising value element.

Correspondingly, in step S109, the using the value of the advertising value element and the advertising value calculation policy as reference factors, to calculate advertising value of the advertisement includes:
using the modified value of the advertising value element and the advertising value calculation policy as reference factors, to calculate the advertising value of the advertisement.

It should be noted that the modification and change herein may be performed according to an actual status of the advertising application platform. A reason for the modification or change is that, in an actual application scenario, not all predicted values of advertising value elements can be directly used. Values of advertising value elements that cannot be directly used are modified or changed. For example, for some niche advertisements, a quantity of samples is relatively small. In this case, deviations are easily caused, and obtained prediction results have no practical meaning. If values of advertising value elements for these niche advertisements are directly used, predictions about advertising value are not accurate. In this case, the values of the advertising value elements need to be adjusted or changed. For example, when quantities of displays and downloads of a niche advertisement are both very small, but a download rate of the niche advertisement is very high, to avoid deviations resulting from a small quantity of samples, a threshold of quantities of displays of all advertisements may be used to substitute the quantity of displays of the niche advertisement.

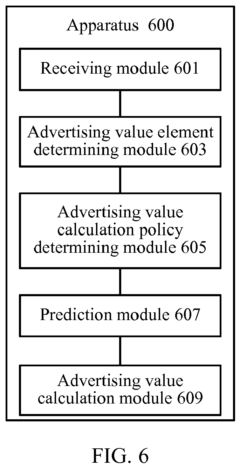

FIG. 6 is a block diagram of an apparatus for determining advertising value according to an embodiment of the present invention. The apparatus 600 shown in FIG. 6 includes a receiving module 601, an advertising value calculation policy determining module 603, a prediction module 607, and an advertising value calculation module 609.

The receiving module 601 is configured to receive advertisement information, where the advertisement information includes an advertisement ID and information about an operation performed by a user on an advertisement.

The advertisement information in this embodiment of the present invention includes but is not limited to the advertisement ID and the information about the operation performed by the user on the advertisement. For example, the advertisement information may further include an advertisement category and other information, which are not listed one by one herein. Optionally, in this embodiment of the present invention, the information about the operation performed by the user on the advertisement includes information about viewing, clicking, downloading, and other operations. The information about viewing, clicking, downloading, and other operations may include operation frequency and operation time of viewing, clicking, and downloading, and other related information.

Ad types are distinguished according to advertising propagation media and generally include conventional print advertising, television advertising, broadcast advertising, outdoor advertising, and network advertising. The advertising in this specification mainly involves network advertising, but does not exclude an ad type that is presented by another propagation medium after advertising value is determined by using this method.

The advertising value calculation policy determining module 603 is configured to determine an advertising value element according to an advertising application platform, and determine an advertising value calculation policy according to the advertising value element, where the advertising value element is an element that affects advertising value; or configured to determine an advertising value calculation policy according to an advertising application platform, where the advertising value calculation policy is represented by the advertising value element.

In this embodiment of the present invention, there may be multiple types of advertising value elements, for example, a payment per view (pV), a click-through rate (CTR), a predicted cost per click (pCPC, predicted cost per click), a pay ratio (PR, Pay Ratio), a predicted payment per pay (pPP, predicted per pay), and a download pay ratio (dPR). In a specific application scenario, advertising value elements supported by different advertising application platforms are different. Therefore, in this embodiment of the present invention, the determining an advertising value element according to an advertising application platform is: determining which advertising value elements can be supported by the advertising application platform, or directly determining an advertising value calculation policy that can be supported or is prestored by the advertising application platform, where the advertising value calculation policy is represented by the advertising value element. Different advertising value elements are corresponding to different predictive models. The predictive model is used to predict the advertising value element. For example, to predict the advertising value element CTR (download rate), a classification model needs to be used, and specifically, an LR (Logistic Regression) model may be selected; to predict the advertising value element pCPC, a regression model needs to be used, and specifically, an RF (Random Forest) model or a GBRT (Gradient Boosting Regression Tree) model may be selected. Predicting the advertising value element by using the predictive model may be understood as preparation work performed off line. However, it should be noted that, in this embodiment of the present invention, not all advertising value elements are predicted by using predictive models corresponding to them. Some advertising value elements can be directly calculated by using a statistical method.

Specifically, in this embodiment of the present invention, the advertising value elements may be combined according to an application requirement, so as to obtain an advertising value calculation policy that meets the application requirement. Different advertising value elements determine different properties, such as monotony and unevenness, in the advertising value calculation policy. The combining the advertising value elements according to an application requirement, so as to obtain an advertising value calculation policy that meets the application requirement may be: combining the two or more advertising value elements by means of multiplication, to constitute a product formula used for calculating the advertising value. The product formula is the advertising value calculation policy, that is, a method for calculating the advertising value. There may be multiple types of specific advertising value calculation policies, for example, pV (when the advertising application platform supports only one advertising value element, or when only one advertising value element is selected from multiple advertising value elements in this embodiment of the present invention, the advertising value element directly constitutes an advertising value calculation policy corresponding to the advertising value element, that is, in this case, a value of the advertising value element may be considered as equal to the advertising value; however, the advertising value element may be further modified or changed, and the advertising value calculation policy is then determined according to a modified or changed advertising value element; this is described in detail hereinafter, and details are not described herein again), where the pV is directly predicted or calculated; pCPC*CTR, where the pCPC and the CTR are separately predicted or calculated; pPP*PR, where the pPP and the PR are separately predicted or calculated; pPP*dPR*CTR, where the pPP, the dPR, and the CTR are separately predicted or calculated; or a combination (for example, weighted averaging) of any two or more of the foregoing advertising value calculation policies.

The prediction module 607 is configured to predict a value of the advertising value element according to the advertisement information, to obtain the value of the advertising value element.

Optionally, the predicting a value of the advertising value element according to the advertisement information may be performed according to a historical data statistics collection method or a classification or regression method in machine learning. It should be noted that, when N advertising value elements are determined according to the advertising application platform, in this embodiment of the present invention, the predicting a value of the advertising value element according to the advertisement information should be understood as separately predicting a value of each of the N advertising value elements according to the advertisement information, where N is a positive integer greater than or equal to 1. It should be noted that, when there is only one advertising value element, a value of the advertising value element is predicted according to the advertisement information; when there are multiple advertising value elements, values of the multiple advertising value elements need to be predicted according to the advertisement information, where multiple means two or more.

The advertising value calculation module 609 is configured to use the value of the advertising value element and the advertising value calculation policy as reference factors, to calculate advertising value of the advertisement.

Specifically, the specific value of the advertising value element may be substituted into the advertising value calculation policy, and the advertising value is obtained by calculation.

To sum up, in this embodiment of the present invention, an advertising value element is determined according to an advertising application platform, and a value of the advertising value element is predicted according to the advertisement information, to obtain the value of the advertising value element; then, the value of the advertising value element and the advertising value calculation policy are used as reference factors, to calculate advertising value of the advertisement. In this way, the advertising value is accurately determined at the front end, and profit maximization of the advertising application platform is made possible.

Based on the apparatus 600, the apparatus 600 provided in this embodiment of the present invention further includes an adjustment module 604, configured to modify or change the advertising value element, to obtain a modified or changed advertising value element.

Correspondingly, the advertising value calculation policy determining module 603 is specifically configured to determine the advertising value calculation policy according to the modified or changed advertising value element.

It should be noted that the modification and change herein may be performed according to an actual status of the advertising application platform. Specifically, the change herein may be transforming the advertising value element to generate an increasing effect or a decreasing effect, so as to meet an actual requirement of the advertising application platform; the modification herein may be making adaptive compensation for the advertising value element, so as to balance a deviation that may be caused by the advertising value element.

Based on the foregoing described embodiment of the present invention, optionally, in the apparatus 600 provided in this embodiment of the present invention, the receiving module 601 may be further configured to receive user information, where the user information includes a user ID, a user age, user gender, or user occupation information.

It should be noted that the user information herein includes but is not limited to the user ID, the user age, the user gender, or the user occupation information. In addition, the user ID, the user age, the user gender, or the user occupation information is optional information. In a specific implementation process, the user information may further include information that indicates interests of the user, social-circle information of the user, context information of viewing the advertisement by the user, or the like.

Correspondingly, the advertising value calculation policy determining module 603 is specifically configured to: use the user information as another reference factor, and perform calculation in combination with the value of the advertising value element and the advertising value calculation policy, to obtain personalized advertising value for the user.

The advertising value is calculated by using the user information as a reference factor, to obtain the personalized advertising value for the user. That is, it is considered that a same advertisement has different advertising value for different users. For example, for a young man, advertisements about games have greater value than advertisements about shopping; conversely, for a young woman, advertisements about shopping have greater value than advertisements about games. Specifically, different individuals have different characteristics, and user age groups, job categories, education levels, interests, and the like are obtained according to user information, so as to calculate different advertising value for different users. In this way, the advertising application platform can use different advertisement presentation policies for different users according to the personalized advertising value, making profit maximization of the advertising application platform possible.

Based on the foregoing described embodiment of the present invention, optionally, when there are two or more advertising value calculation policies determined by the advertising value calculation policy determining module, the advertising value calculation policy determining module 603 in the apparatus 600 provided in this embodiment of the present invention is further configured to select an optimal advertising value calculation policy from the two or more advertising value calculation policies.

Correspondingly, the advertising value calculation module 607 is specifically configured to use the value of the advertising value element and the optimal advertising value calculation policy as reference factors, to calculate the advertising value of the advertisement.

It should be noted that the optimal advertising value calculation policy herein is outcome-oriented. That is, the advertising value is calculated by using the advertising value calculation policy, and then different advertisements are ranked and presented to the users according to the advertising value, so that maximum profits are brought to the advertising application platform; in this case, the advertising value calculation policy is considered as the optimal advertising value calculation policy. It should be noted that ranking different advertisements according to advertising value usually involves multiple advertisements and calculation of value of the multiple advertisements, and a final ranking is a ranking of the advertising value corresponding to the multiple advertisements. Herein, "multiple" may be two or more.

In addition, it should be noted that optimal advertising value calculation policies may be different in different scenarios. Methods for selecting an optimal advertising value calculation policy include: evaluating, according to offline AUCs (area under the curve), MAEs (mean absolute error), and other evaluation indicators, different calculation policies and predictive models corresponding to advertising value elements in the calculation policies; or evaluating different advertising value calculation policies according to online revenues.

Based on the foregoing described embodiment of the present invention, when there are two or more advertising value calculation policies determined by the advertising value calculation policy determining module, the advertising value calculation policy determining module 603 in the apparatus 600 provided in this embodiment of the present invention is further configured to weight the two or more advertising value calculation policies, to obtain a comprehensive advertising value calculation policy.

Correspondingly, the advertising value calculation module 609 is specifically configured to use the value of the advertising value element and the comprehensive advertising value calculation policy as reference factors, to calculate the advertising value of the advertisement.

To be distinguished from the comprehensive advertising value calculation policy, the advertising value calculation policy is referred to as an independent advertising value calculation policy. The comprehensive advertising value calculation policy is a combination of any two or more independent advertising value calculation policies. In this implementation, a combination manner may be weighting. Certainly, the present invention does not limit the combination manner. Any combination manner that can achieve the objectives and effects of the present invention shall fall within the protection scope of the present invention, and details are not described herein again. It should be noted that calculation of the advertising value by using the comprehensive advertising value calculation policy may be specifically performed in a manner of ensemble learning. The ensemble learning is a machine learning method in which learning is performed by using a series of predictive models and all learning outcomes are consolidated according to a rule, so as to obtain a better learning effect than that obtained by using a single predictive model. The independent advertising value calculation policy herein is a complete policy that can complete calculation of advertising value independently, for example, the above-mentioned pV, pCPC*CTR, pPP*PR, and pPP*dPR*CTR.

Based on all the foregoing described embodiments of the present invention, optionally, the advertising value calculation policy determining module 603 is specifically configured to determine, as the advertising value element, an advertising value element supported by the advertising application platform.

Optionally, the advertising value calculation policy determining module 603 is specifically configured to determine, as the advertising value calculation policy, an advertising value calculation policy supported or prestored by the advertising application platform.

Further optionally, the adjustment module 604 in the apparatus 600 provided in this embodiment of the present invention is further configured to modify the value of the advertising value element, to obtain a modified value of the advertising value element.

Correspondingly, the advertising value calculation module is configured to use the modified value of the advertising value element and the advertising value calculation policy as reference factors, to calculate the advertising value of the advertisement.

It should be noted that the modification and change herein may be performed according to an actual status of the advertising application platform. A reason for the modification or change is that, in an actual application scenario, not all predicted values of advertising value elements can be directly used. Values of advertising value elements that cannot be directly used are modified or changed. For example, for some niche advertisements, a quantity of samples is relatively small. In this case, deviations are easily caused, and obtained prediction results have no practical meaning. If values of advertising value elements for these niche advertisements are directly used, predictions about advertising value are not accurate. In this case, the values of the advertising value elements need to be adjusted or changed. For example, when quantities of displays and downloads of a niche advertisement are both very small, but a download rate of the niche advertisement is very high, to avoid deviations resulting from a small quantity of samples, a threshold of quantities of displays of all advertisements may be used to substitute the quantity of displays of the niche advertisement.

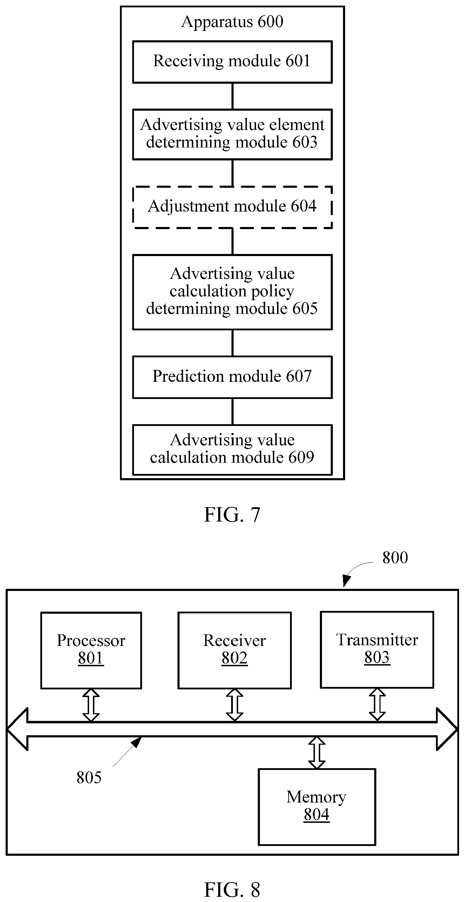

The apparatus 600 shown in FIG. 6 and FIG. 7 can implement the method for determining advertising value described in the foregoing embodiment. To avoid repetition, details are not described herein again.

FIG. 8 is a block diagram of an apparatus 800 for determining advertising value according to another embodiment of the present invention. The device 800 shown in FIG. 8 includes a processor 801, a receiver 802, a transmitter 803, and a memory 804.

The receiver 802 is configured to receive advertisement information, where the advertisement information includes an advertisement ID and information about an operation performed by a user on an advertisement.

The processor 801 is configured to: determine an advertising value element according to an advertising application platform, and determine an advertising value calculation policy according to the advertising value element, where the advertising value element is an element that affects advertising value; or determine an advertising value calculation policy according to an advertising application platform, where the advertising value calculation policy is represented by the advertising value element; predict a value of the advertising value element according to the advertisement information, to obtain the value of the advertising value element; and use the value of the advertising value element and the advertising value calculation policy as reference factors, to calculate advertising value of the advertisement.

To sum up, in this embodiment of the present invention, an advertising value element is determined according to an advertising application platform, and a value of the advertising value element is predicted according to the advertisement information, to obtain the value of the advertising value element; then, the value of the advertising value element and the advertising value calculation policy are used as reference factors, to calculate advertising value of the advertisement. In this way, the advertising value is accurately determined at the front end, and profit maximization of the advertising application platform is made possible.

All components in the device 800 are coupled to each other by using a bus system 805. The bus system 805 not only includes a data bus but also includes a power bus, a control bus, and a status signal bus. However, for clear description, all buses are marked as the bus system 805 in FIG. 8.

The foregoing method disclosed in the embodiments of the present invention may be applied to the processor 801 or implemented by the processor 801. The processor 801 may be an integrated circuit chip, and has a signal processing capability. In an implementation process, the steps of the foregoing method may be completed by using an integrated logic circuit of hardware in the processor 801 or by using an instruction in a form of software. The processor 801 may be a general purpose processor, a digital signal processor (Digital Signal Processor, DSP), an application-specific integrated circuit (Application Specific Integrated Circuit, ASIC), a field-programmable gate array (Field-programmable Gate Array, FPGA) or another programmable logic device, a discrete gate or a transistor logic device, or a discrete hardware component, and can implement or execute the methods, the steps, and the logical block diagrams disclosed in the embodiments of the present invention. The general purpose processor may be a microprocessor, or the processor may be any conventional processor or the like. The steps of the method disclosed with reference to the embodiments of the present invention may be directly executed by a hardware decoding processor, or may be executed by using a combination of hardware in a decoding processor and a software module. The software module may be located in a storage medium that is mature in the art, such as a random memory, a flash memory, a read-only memory, a programmable read-only memory, an electrically erasable programmable memory, or a register. The storage medium is located in the memory 804. The processor 801 reads information in the memory 804 and completes the steps of the foregoing method in combination with hardware of the processor 801.

It can be understood that the memory 804 in this embodiment of the present invention may be a volatile memory or a nonvolatile memory, or may include both a volatile memory and a nonvolatile memory. The nonvolatile memory may be a read-only memory (Read-Only Memory, ROM), a programmable ROM (Programmable ROM, PROM), an erasable programmable read only memory (Erasable PROM, EPROM), an electrically erasable programmable read-only memory (Electrically EPROM, EEPROM), or a flash memory. The volatile memory may be a random access memory (Random Access Memory, RAM) and is used as an external cache. By means of illustrative rather than limitative descriptions, multiple forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct memory bus random access memory (Direct Rambus RAM, DR RAM). The memory 804 in the system and method described in this specification is intended to include but is not limited to these memories and any other proper type of memory.

It can be understood that the embodiments described in this specification may be implemented by using hardware, software, firmware, middleware, microcode, or a combination thereof. For hardware implementation, a processing unit may be implemented in one or more application-specific integrated circuits (Application Specific Integrated Circuit, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general purpose processors, controllers, microcontrollers, microprocessors, other electronic units configured to perform the functions described in this application, or a combination thereof.

When the embodiments are implemented by using the software, the firmware, the middleware, the microcode, program code, or a code segment, the software, the firmware, the middleware, the microcode, the program code, or the code segment may be stored in, for example, a machine-readable medium of a storage component. The code segment may represent any combination of a process, a function, a subprogram, a program, a routine, a subroutine, a module, a software group, a class, an instruction, a data structure, or a program statement. The code segment may be integrated into another code segment or a hardware circuit by transmitting and/or receiving information, data, an independent variable, a parameter, or memory content. The information, the independent variable, the parameter, the data, and the like may be delivered, forwarded, or sent in any proper manner, such as memory sharing, message transfer, token transfer, or network transmission.

For software implementation, the technology described in this specification may be implemented by a module (for example, a process or a function) that performs the functions described in this specification. Software code may be stored in a memory unit and executed by using a processor. The memory unit may be implemented in the processor or outside the processor. In the latter case, the memory unit may be coupled to the processor by means of communication by using various approaches known in the art.

In this way, in this embodiment of the present invention, an advertising value element is determined according to an advertising application platform, and a value of the advertising value element is predicted according to the advertisement information, to obtain the value of the advertising value element; then, the value of the advertising value element and the advertising value calculation policy are used as reference factors, to calculate advertising value of the advertisement. In this way, the advertising value is accurately determined at the front end, and profit maximization of the advertising application platform is made possible. Optionally, in an embodiment, when there are two or more advertising value elements determined by the processor 801, the processor 801 is specifically configured to combine the two or more advertising value elements, to obtain the advertising value calculation policy.

Optionally, in another embodiment, the processor 801 is specifically configured to: modify or change the advertising value element, to obtain a modified or changed advertising value element; and determine the advertising value calculation policy according to the modified or changed advertising value element.

Optionally, in another embodiment, the receiver 802 is further configured to receive user information, where the user information includes a user ID, a user age, user gender, or user occupation information. The processor 801 is specifically configured to: use the user information as another reference factor, and perform calculation in combination with the value of the advertising value element and the advertising value calculation policy, to obtain personalized advertising value for the user.

Optionally, in another embodiment, when there are two or more advertising value calculation policies, the processor 801 is specifically configured to select an optimal advertising value calculation policy from the two or more advertising value calculation policies, and is further configured to use the value of the advertising value element and the optimal advertising value calculation policy as reference factors, to calculate the advertising value of the advertisement.

Optionally, in another embodiment, when there are two or more advertising value calculation policies, the processor 801 is specifically configured to weight the two or more advertising value calculation policies, to obtain a comprehensive advertising value calculation policy; and is further configured to use the value of the advertising value element and the comprehensive advertising value calculation policy as reference factors, to calculate the advertising value of the advertisement.

Optionally, in another embodiment, the processor 801 is specifically configured to: modify the value of the advertising value element, to obtain a modified value of the advertising value element; and further use the modified value of the advertising value element and the advertising value calculation policy as reference factors, to calculate the advertising value of the advertisement.

Optionally, in another embodiment, the processor 801 is specifically configured to predict the value of the advertising value element according to a historical data statistics collection method or a classification or regression method in machine learning, to obtain the value of the advertising value element.

Optionally, the apparatus 800 shown in FIG. 8 is an apparatus for determining advertising value. The apparatus 800 shown in FIG. 8 can implement the method for determining advertising value described in the foregoing embodiments. To avoid repetition, details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. Indirect couplings or communication connections between the apparatuses or units may be implemented electronically, mechanically, or in other forms.

The units described as separate parts may or may not be physically separate, and parts displayed as units may or may not be physical units, may be located in one position, or may be distributed on multiple network units. Some or all of the units may be selected according to an actual requirement, to achieve the objectives of the solutions of the embodiments.

In addition, functional units in the embodiments of the present invention may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a portable hard disk, a ROM, a RAM, a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for determining advertising value, comprising:
receiving advertisement information, wherein the advertisement information comprises an advertisement ID and information about an operation performed by a user on an advertisement;
determining an advertising value element according to an advertising application platform, and determining an advertising value calculation policy according to the advertising value element, wherein the advertising value element is an element that affects advertising value; or
determining an advertising value calculation policy according to an advertising application platform, wherein the advertising value calculation policy is represented by the advertising value element;
predicting a value of the advertising value element according to the advertisement information, to obtain the value of the advertising value element; and
using the value of the advertising value element and the advertising value calculation policy as reference factors, to calculate advertising value of the advertisement.

2. The method according to claim 1, wherein when there are two or more determined advertising value elements, the determining an advertising value calculation policy according to the advertising value element comprises:
combining the two or more advertising value elements, to obtain the advertising value calculation policy.

3. The method according to claim 2, wherein the combining the two or more advertising value elements, to obtain the advertising value calculation policy comprises: combining the two or more advertising value elements by means of multiplication, to constitute a product formula used for calculating the advertising value, wherein the product formula is the advertising value calculation policy.

4. The method according to any one of claims 1 to 3, wherein before the determining an advertising value calculation policy according to the advertising value element, the method further comprises:
modifying or changing the advertising value element, to obtain a modified or changed advertising value element; and
correspondingly, the determining an advertising value calculation policy according to the advertising value element comprises:
determining the advertising value calculation policy according to the modified or changed advertising value element.

5. The method according to any one of claims 1 to 4, where before the predicting a value of the advertising value element according to the advertisement information, to obtain the value of the advertising value element, the method further comprises: receiving user information, wherein the user information comprises a user ID, a user age, user gender, or user occupation information; and
correspondingly, the using the value of the advertising value element and the advertising value calculation policy as reference factors, to calculate advertising value of the advertisement comprises:
using the user information as another reference factor, and performing calculation in combination with the value of the advertising value element and the advertising value calculation policy, to obtain personalized advertising value for the user.

6. The method according to any one of claims 1 to 5, wherein when there are two or more determined advertising value calculation policies, after the determining an advertising value calculation policy according to the advertising value element, or after the determining an advertising value calculation policy according to an advertising application platform, the method further comprises:
selecting an optimal advertising value calculation policy from the two or more advertising value calculation policies; and
correspondingly, the using the value of the advertising value element and the advertising value calculation policy as reference factors, to calculate advertising value of the advertisement comprises:
using the value of the advertising value element and the optimal advertising value calculation policy as reference factors, to calculate the advertising value of the advertisement.

7. The method according to any one of claims 1 to 5, wherein when there are two or more determined advertising value calculation policies, after the determining an advertising value calculation policy according to the advertising value element, or after the determining an advertising value calculation policy according to an advertising application platform, the method further comprises:
weighting the two or more advertising value calculation policies, to obtain a comprehensive advertising value calculation policy; and
correspondingly, the using the value of the advertising value element and the advertising value calculation policy as reference factors, to calculate advertising value of the advertisement comprises:
using the value of the advertising value element and the comprehensive advertising value calculation policy as reference factors, to calculate the advertising value of the advertisement.

8. The method according to any one of claims 1 to 7, wherein the determining an advertising value element according to an advertising application platform comprises: determining, as the advertising value element, an advertising value element supported by the advertising application platform.

9. The method according to any one of claims 1 to 8, wherein the determining an advertising value calculation policy according to an advertising application platform comprises: determining, as the advertising value calculation policy, an advertising value calculation policy supported or prestored by the advertising application platform.

10. The method according to any one of claims 1 to 9, wherein after the predicting a value of the advertising value element according to the advertisement information, to obtain the value of the advertising value element, the method further comprises:
modifying the value of the advertising value element, to obtain a modified value of the advertising value element; and
correspondingly, the using the value of the advertising value element and the advertising value calculation policy as reference factors, to calculate advertising value of the advertisement comprises:
using the modified value of the advertising value element and the advertising value calculation policy as reference factors, to calculate the advertising value of the advertisement.

11. The method according to any one of claims 1 to 10, wherein the advertising value element comprises: a payment per view (PV), a click-through rate (CTR), a predicted cost per click (PCPC), a pay ratio (PR), a predicted payment per pay (PPP), and a download pay ratio (DPR).

12. The method according to any one of claims 1 to 11, wherein the predicting a value of the advertising value element, to obtain the value of the advertising value element comprises:
predicting the value of the advertising value element according to a historical data statistics collection method or a classification or regression method in machine learning, to obtain the value of the advertising value element.

13. An apparatus for determining advertising value, comprising:
a receiving module, configured to receive advertisement information, wherein the advertisement information comprises an advertisement ID and information about an operation performed by a user on an advertisement;
an advertising value calculation policy determining module, configured to determine an advertising value element according to an advertising application platform, and determine an advertising value calculation policy according to the advertising value element, wherein the advertising value element is an element that affects advertising value; or configured to determine an advertising value calculation policy according to an advertising application platform, wherein the advertising value calculation policy is represented by the advertising value element;
a prediction module, configured to predict a value of the advertising value element according to the advertisement information, to obtain the value of the advertising value element; and
an advertising value calculation module, configured to use the value of the advertising value element and the advertising value calculation policy as reference factors, to calculate advertising value of the advertisement.

14. The apparatus according to claim 13, wherein when there are two or more advertising value elements determined by the advertising value calculation policy determining module, the advertising value calculation policy determining module is specifically configured to combine the two or more advertising value elements, to obtain the advertising value calculation policy.

15. The apparatus according to claim 14, wherein when there are two or more advertising value elements determined by the advertising value calculation policy determining module, the advertising value calculation policy determining module is specifically configured to combine the two or more advertising value elements by means of multiplication, to constitute a product formula used for calculating the advertising value, wherein the product formula is the advertising value calculation policy.

16. The apparatus according to claim 13 or 15, wherein the apparatus further comprises an adjustment module, configured to modify or change the advertising value element, to obtain a modified or changed advertising value element; and
correspondingly, the advertising value calculation policy determining module is configured to determine the advertising value calculation policy according to the modified or changed advertising value element.

17. The apparatus according to any one of claims 13 to 16, wherein the receiving module is further configured to receive user information, wherein the user information comprises a user ID, a user age, user gender, or user occupation information; and
correspondingly, the advertising value calculation module is configured to: use the user information as another reference factor, and perform calculation in combination with the value of the advertising value element and the advertising value calculation policy, to obtain personalized advertising value for the user.

18. The apparatus according to any one of claims 13 to 17, wherein when there are two or more advertising value calculation policies determined by the advertising value calculation policy determining module, the advertising value calculation policy determining module is further configured to select an optimal advertising value calculation policy from the two or more advertising value calculation policies; and
correspondingly, the advertising value calculation module is configured to use the value of the advertising value element and the optimal advertising value calculation policy as reference factors, to calculate the advertising value of the advertisement.

19. The apparatus according to any one of claims 13 to 17, wherein when there are two or more advertising value calculation policies determined by the advertising value calculation policy determining module, the advertising value calculation policy determining module is further configured to weight the two or more advertising value calculation policies, to obtain a comprehensive advertising value calculation policy; and
correspondingly, the advertising value calculation module is configured to use the value of the advertising value element and the comprehensive advertising value calculation policy as reference factors, to calculate the advertising value of the advertisement.

20. The apparatus according to any one of claims 13 to 19, wherein the advertising value calculation policy determining module is specifically configured to determine, as the advertising value element, an advertising value element supported by the advertising application platform.

21. The apparatus according to any one of claims 13 to 20, wherein the advertising value calculation policy determining module is specifically configured to determine, as the advertising value calculation policy, an advertising value calculation policy supported or prestored by the advertising application platform.

22. The apparatus according to any one of claims 16 to 20, wherein the adjustment module is further configured to modify the value of the advertising value element, to obtain a modified value of the advertising value element; and
correspondingly, the advertising value calculation module is configured to use the modified value of the advertising value element and the advertising value calculation policy as reference factors, to calculate the advertising value of the advertisement.

23. The apparatus according to any one of claims 13 to 22, wherein the advertising value element comprises: a payment per view (PV), a click-through rate (CTR), a predicted cost per click (PCPC), a pay ratio (PR), a predicted payment per pay (PPP), and a download pay ratio (DPR).

24. The apparatus according to any one of claims 13 to 23, wherein the prediction module is specifically configured to predict the value of the advertising value element according to a historical data statistics collection method or a classification or regression method in machine learning, to obtain the value of the advertising value element.
